Europäisches Patentamt

European Patent Office

Office européen des brevets

(11) Veröffentlichungsnummer: **0 252 263 B1**

(12) **EUROPÄISCHE PATENTSCHRIFT**

(45) Veröffentlichungstag der Patentschrift: **05.08.92**

(21) Anmeldenummer: **87107558.6**

(22) Anmeldetag: **23.05.87**

(51) Int. Cl.⁵: **G01N 27/30**, A61B 5/14,
G01N 27/416

(54) **Elektrodenanordnung.**

(30) Priorität: **06.06.86 CH 2308/86**

(43) Veröffentlichungstag der Anmeldung:
**13.01.88 Patentblatt 88/02**

(45) Bekanntmachung des Hinweises auf die
Patenterteilung:
**05.08.92 Patentblatt 92/32**

(84) Benannte Vertragsstaaten:
**CH DE ES FR GB IT LI**

(56) Entgegenhaltungen:
**CH-A- 653 236**
**DE-A- 1 917 179**
**DE-A- 2 851 447**
**GB-A- 2 005 418**
**GB-A- 2 014 738**

(73) Patentinhaber: **KONTRON INSTRUMENTS HOL-**
**DING N.V.**
**Pietermaai 6 A P.O. Box 504**
**Curacao(AN)**

(72) Erfinder: **Eberhard, Patrick, Dr.**
**Parkallee 11**
**CH-4123 Allschwil(CH)**
Erfinder: **Mindt, Wolfgang, Dr.**
**Sonnmattstrasse 25**
**CH-4142 Münchenstein(CH)**
Erfinder: **Palma, Jean-Pierre**
**Mühleweg 17**
**CH-4133 Pratteln(CH)**

(74) Vertreter: **Riccardi, Sergio**
**Riccardi & Co. Via Macedonio Melloni, 32**
**I-20129 Milano(IT)**

## Beschreibung

Die Erfindung betrifft eine Elektrodenanordnung zur kombinierten Messung des $CO_2$-Partialdrucks, $pCO_2$, und des $O_2$-Partialdrucks, $pO_2$ eines Mediums mit zwei Messelektroden und einer Referenzelektrode, einer die Elektroden bedeckenden Membran und einer Elektrolytschicht zwischen den Elektroden und der Membran.

Elektroden dieser Art werden auch als Sensoren bezeichnet und sind u.a. bekannt für die kutane Messung der $CO_2$ -und $O_2$-Partialdrucke im Blut. Zu diesem Zweck wird durch eine in der Elektrodenanordnung vorhandene Heizung das Gewebe am Messort geheizt und dadurch arterialisiert.

Die Messelektroden werden durch eine sog. pH-Glaselektrode zur indirekten $pCO_2$-Messung, sowie einer Platin-Mikrokathode zur $pO_2$-Messung gebildet, wie sie dem Fachmann bekannt sind. Die Referenzelektrode ist eine übliche Silber/Silberchloridelektrode.

Die bisherigen Erfahrungen mit solchen Elektroden haben gezeicht, dass im Betrieb zwei typische Fehlerquellen auftreten:

1. An der Messelektrode, die in der Regel aus einer Platin-Mikrokathode besteht, bilden sich unregelmässige Ablagerungen von Silber, die in der Literatur teilweise als Dendriten bezeichnet werden. Diese Ablagerungen verursachen eine allmähliche Vergrösserung der Kathodenoberfläche und somit eine unreproduzierbare und unkontrollierbare Drift der Messempfindlichkeit des Sensors. Da die Silberablagerungen zum Teil mechanisch unstabil sind, können sie durch einen leichten Druck auf die Membranoberfläche (z.B. beim Reinigen des Sensors) von der Platinkathode abgetrennt werden. Hierdurch kann eine plötzliche, vom Benutzer häufig unbemerkte Aenderung des Messempfindlichkeit verursacht werden.

2. Infolge der unkontrollierten Silberabscheidung ist bei derzeitig gebräuchlichen Sensoren zur Messung des Sauerstoffpartialdruckes eine regelmässige sorgfältige Reinigung der Kathodenoberfläche erforderlich. Diese Reinigung erfolgt durch umständliches und für den Benutzer oft als mühsam empfundenes manuelles Bearbeiten (Reiben) der Kathodenoberfläche mit einem Poliertuch. Diese Reinigung bewirkt, sofern sie sorgfältig ausgeführt wird, die vollständige Entfernung der Silberabscheidung und die Wiederherstellung einer reinen Platinoberfläche der Kathode. Wenn der Sensor erstmalig oder nach sorgfältiger Reinigung wieder in Betrieb genommen wird, dauert es längere Zeit, bis stabile Messungen möglich sind. Diese Zeit ist unreproduzierbar und hängt davon ab, wie sorgfältig die Reinigung vorgenommen worden ist. Häufig verhält es sich so, dass die Zeit bis zur Stabilisierung des Messtromes um so länger ist, desto sorgfältiger die Reinigung vorgenommen worden ist. Es ist offensichtlich, dass dies für den Benützer unverständlich und frustrierend ist und als ein gravierender Nachteil empfunden wird.

Es wurde nun überraschend gefunden, dass die Voraussetzung für eine stabile Messung des $pO_2$ das Vorhandensein einer dünnen Silberschicht auf der Platinelektrode ist. Bei neuen Elektroden hat sich die Silberschicht noch nicht gebildet, und bei schon im Gebrauch befindlichen Elektroden wird die während des Betriebs gebildete Silberschicht beim gründlichen Reinigen (Polieren) der Oberfläche regelmässig beseitigt.

Eine für Elektroden zur ausschliesslichen $pO_2$-Messung gefundene Lösung zur Verringerung des Problems der Dendritenbildung scheidet bei kombinierten $pO_2$/$pCO_2$-Sensoren aus. Für die $pO_2$-Messung allein kann die Fläche der Referenzelektrode so drastisch reduziert werden, dass die Menge der von ihr in Lösung gehenden Silberionen vernachlässigbar klein wird. Für die $pCO_2$-Messung ist diese Lösung nicht möglich, weil die Referenzelektrode eine Mindestfläche aufweisen muss. Diese Mindestfläche ist erforderlich, damit die durch die $pO_2$-Messung bedingte Stromdichte möglichst niedrig gehalten wird und somit die Beeinflussung des Potentials der Referenzelektrode durch den $pO_2$-Messtrom vernachlässigbar klein wird.

Der Erfindung liegt die Aufgabe zugrunde, bei einer kombinierten $pO_2$- und $pCO_2$-Sensor die unkontrollierte, zu Dendritenbildung führende Silberablagerung an der $pO_2$-Messelektrode zu vermeiden und gleichzeitig eine definierte Silberschicht auf ihr zu erzeugen.

Erfindungsgemäss wird dies dadurch erreicht, dass die Referenzelektrode von einer Abschirmung aus Gold umgeben ist, das auf demselben potential wie die Referenzelektrode liegt und dass der Elektrolyt eine definierte Konzentration einer Silberverbindung oder eines Silberkomplexes gelöst enthält.

Ein Ausführungsbeispiel der Erfindung ist nachfolgend anhand der beiliegenden Zeichnung beschrieben. Es zeigen

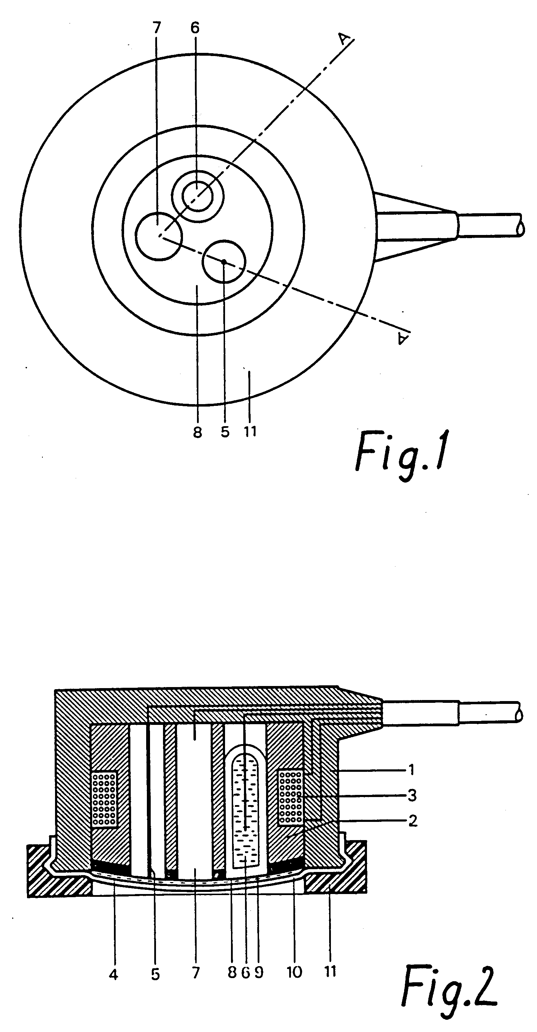

Fig. 1 eine Aufsicht auf die Messfläche eines kutanen kombinierten $pO_2$- und $pCO_2$-Sensors mit entfernter Membran.

Fig. 2 einen Schnitt durch die $pO_2$/$pCO_2$-Elektrode der Fig. 1 entlang der Linie A-A.

Wie aus den beiden Figuren der Zeichnung ersichtlich, besteht die Elektrodenanordnung wie üblich aus einem Gehäuse 1 und einem darin angeordneten Metallblock 2, der von einer Heizwindung 3 umgeben ist. Der Metallblock 2 besteht aus eloxiertem Aluminium und besitzt an seiner freiliegenden Oberfläche - in der Zeichnung unten - eine massive Goldauflage 4. Innerhalb des Metallblocks 2 ist eine Messelektrode 5 für pO$_2$, eine weitere Messelektrode für pCO$_2$ und eine Referenzelektrode 7 angeordnet. Bei der Messelektrode 5 für pO$_2$ handelt es sich um die Kathode, die im vorliegenden Fall als sogenannte Mikrokathode ausgebildet ist. Sie besteht aus einem Platindraht von ca. 30 µm Durchmesser, der in Glas eingegossen und nur mit seiner Stirnfläche exponiert ist.

Die zweite Messelektrode 6 für pCO$_2$ ist eine herkömmliche Glaselektrode. die mit Epoxydharz in einer für sie bestimmte Bohrung montiert ist.

Die Referenzelektrode 7, die für die pO$_2$-Messung als Anode geschaltet ist, besteht aus Silber und ist an ihrer Stirnfläche chloriert. Bei den bisher bekannten kutanen Sensoren dieser Art war die Referenzelektrode meistens ringförmig um die Messelektroden herum angeordnet. Im vorliegenden Fall wurde zur Verringerung der Fläche keine ringförmige, sondern eine kleinere kreisförmige Referenzelektrode vorgesehen. Allerdings kann wegen der erwähnten Notwendigkeit einer niedrigen Stromdichte die Referenzelektrode nur begrenzt verkleinert werden. Sie hat einen Durchmesser von mindestens einem Zehntel und höchstens einem Drittel des Durchmessers der gesamten aktiven Sensorfläche.

Die Messelektroden 5 und 6 und die Referenzelektrode 7 sind so im Metallblock 12 angeordnet, dass sie eine gemeinsame konvex gewölbte Stirnfläche oder Messfläche 8 bilden. Die Messfläche 8 ist mit einer Elektrolytschicht 9 bedeckt, die wiederum von einer semipermeablen Membran 10 abgedeckt ist. Die Membran 10 wird von einem Spannring 11 gehalten und gespannt.

Die Membran 10 besteht aus Teflon® oder einem anderen für diese Anwendung bekannten und üblichen Kunststoff.

Die verkleinerte Referenzelektrode führt dazu, dass weniger Silber in Lösung geht und dadurch auch weniger Dendritenbildung an der Kathode auftritt. Allerdings kann durch die nur begrenzt mögliche Verkleinerung der Referenzelektrode die Dendritenbildung nicht genügend verhindert werden. Durch die Goldauflage, die die Referenzelektrode vollständig umgibt, werden aber weitere Silberionen abgefangen, die sonst zur Mikrokathode gelangen würden. Die Abfangwirkung des Goldes reduziert somit die Neigung zur Dendritenbildung auf ein vernachlässigbar kleines Mass.

Der Umstand, dass weniger Silber in Lösung geht bzw. zur Referenzelektrode gelangt, führt nun aber dazu, dass es länger dauert bis die blanke Mikrokathode versilbert ist und bis man somit nach dem Vorstehenden stabile Messungen erwarten kann. Um eine kontrollierte Silberabscheidung auf der Kathode sicherzustellen, ist dem Elektrolyten Silber in einer geeigneten löslichen Verbindung oder einem löslichen Komplex beigegeben. Auf diese Weise kann durch kontrollierte Silberabscheidung sogar eine Verkürzung der Zeit erreicht werden, die es braucht, bis stabile Messungen durchgeführt werden können.

Als lösliche Silberverbindung kommen folgende Verbindungen in Frage: AgCl, AgCN, AgNO$_3$. Als Komplexbildner für Silber kommen z.B. Aethylendiamin-tetraessigsäure (EDTA) und Diäthylentriamin-pentaessigsäure (DTPA) in Frage. Die Konzentration des dem Elektrolyten zugefügten Silbers liegt typisch in der Grössenordnung zwischen 10 und $100 \cdot 10^{-6}$ mol/l.

**Patentansprüche**

1. Elektrodenanordnung zur kombinierten Messung der O$_2$- und CO$_2$-Partialdrucke eines Mediums mit Messelektroden (5,6) und einer Referenzelektrode (7), einer die Elektroden bedeckenden Membran (10) und einer Elektrolytschicht (9) zwischen den Elektroden und der Membran, dadurch gekennzeichnet, dass die Referenzelektrode (7) von einer Abschirmung (4) aus Gold umgeben ist, das auf demselben Potential wie die Referenzelektrode liegt und dass der Elektrolyt (9) eine definierte Konzentration einer löslichen Silberverbindung oder eines Silberkomplexes enthält.

2. Elektrodenanordnung nach Anspruch 1, dadurch gekennzeichnet, dass die Referenzelektrode (7) eine kreisförmige Fläche darstellt mit einem Durchmesser von mindestens einem Zehntel und höchstens einem Drittel des Durchmessers der gesamten Messfläche (8).

**Claims**

1. Electrode arrangement for the combined measurement of the O$_2$ and CO$_2$ partial pressures of a medium using measuring electrodes (5,6) and a reference electrode (7), a diaphragm which covers the electrodes (10) and a layer of electrolyte (9) positioned between the electrodes and the diaphragm, characterised in that the reference electrode (7) is surrounded by a screen (4) of gold which displays the same potential as the reference electrode and that the electrolyte (9) contains a defined concentration of a soluble silver compound or a silver complex.

2. Electrode arrangement according to claim 1, characterised in that the reference electrode (7) has a circular-shaped area with a diameter of at least one tenth and at most one third of the diameter of the total measuring area (8).

## Revendications

1. Agencement d'électrodes pour la mesure combinée de la pression partielle de $O_2$ et de $CO_2$ d'un fluide, comprenant des électrodes de mesure (5, 6) et une électrode de référence (7), une membrane (10) couvrant les électrodes et une couche d'électrolyte (9) entre les électrodes et la membrane, caractérisé en ce que l'électrode de référence (7) est enveloppée d'un écran (4) d'or qui est au même potentiel que l'électrode de référence et en ce que l'électrolyte (9) contient une concentration définie d'un composé soluble d'argent ou d'un complexe soluble d'argent.

2. Agencement d'électrodes selon la revendication 1, caractérisé en ce que l'électrode de référence (7) représente une surface circulaire d'un diamètre d'au moins un dixième et au maximum d'un tiers du diamètre de la totalité de la surface de mesure (8).

Fig.1

Fig.2